# EUROPÄISCHE PATENTSCHRIFT

(11) **EP 2 804 014 B1**
(45) Veröffentlichungstag und Bekanntmachung des Hinweises auf die Patenterteilung: **06.05.2015**
(21) Anmeldenummer: 13167406.1
(22) Anmeldetag: 13.05.2013
(51) Int. Cl.: G01S 7/41, G01S 13/06, G01S 13/92

(54) **Vorrichtung und Verfahren zum Bestimmen eines Fahrzeugmerkmals**
Device and method for determining a characteristic of a vehicle
Dispositif et procédé destinés à la détermination d'une caractéristique de véhicule

(43) Veröffentlichungstag der Anmeldung: 19.11.2014
(73) Patentinhaber: Kapsch TrafficCom AG, 1120 Wien (AT)
(72) Erfinder: Nagy, Oliver, 1190 Wien (AT)
(74) Vertreter: Weiser, Andreas

(56) Entgegenhaltungen:
- EP-A2- 0 636 900
- US-A1- 2002 140 924

## Beschreibung

Die vorliegende Erfindung betrifft eine Vorrichtung und ein Verfahren zum Bestimmen eines charakteristischen Merkmals eines auf einer Fahrbahn fahrenden Fahrzeugs. Die Erfindung betrifft ferner eine Anlage mit zumindest zwei solchen Vorrichtungen.

Das Bestimmen charakteristischer Merkmale von Fahrzeugen ist für vielerlei Aufgaben in der Verkehrssteuerung, -überwachung und -vergebührung wichtig. So können einzelne Fahrzeuge erfasst und beispielsweise gezählt oder automatisch verfolgt werden, anhand ihrer Merkmale gewissen Fahrzeugklassen - z.B. PKW oder LKW - zugeordnet und in Straßenmaut- oder Parkgebührensystemen darauf aufbauende klassenabhängige Tarifmodelle oder fahrzeugklassenabhängige Fahrbeschränkungen realisiert, kontrolliert und durchgesetzt werden.

Zu einer Bestimmung charakteristischer Merkmale werden derzeit vorwiegend optische Systeme eingesetzt, wie Lichtschranken, Laserscanner (z.B. US 2002/0140924 A1) oder Videokameras. Aus der EP 2 306 429 B1 ist z.B. ein nach dem Lichtschnitt-Verfahren arbeitender Laserscanner bekannt. Solche Systeme sind auf gute Sichtverhältnisse angewiesen und daher stark witterungsabhängig; bei Regen, Schnee oder Sprühgischt versagen sie häufig. Die Optiken der Lichtschranken, Laserscanner und Videokameras erfordern auch eine häufige Reinigung, um einsatzbereit zu bleiben.

In Teilbereichen wie Verkehrsflussmonitoranlagen werden derzeit auch Radarsysteme verwendet, die von einem erhöhten Punkt aus, beispielsweise einem Antennenmast neben einer Autobahn, die Bewegungen des Verkehrs mittels Dopplerradars detektieren und in einem Radarbild mitverfolgen lassen. Die Messgenauigkeit solcher Radarsysteme ist jedoch begrenzt, und die Auswertung der Geschwindigkeiten erfordert einen hohen Rechenaufwand, um das Verkehrsflussbild zu erstellen. In der EP 0 636 900 A2 werden Radarstrahlen zur Geschwindigkeits- und Entfernungsmessung verwendet, um daraus eine Entfernungsmesspunkt-Silhouette des Fahrzeugs zu erstellen.

Die Erfindung setzt sich zum Ziel, eine Vorrichtung und ein Verfahren zum Bestimmen eines charakteristischen Merkmals eines Fahrzeugs zu schaffen, welche störungsunanfälliger und wartungsärmer als die bekannten optischen Systeme und einfacher, kostengünstiger und genauer als die bekannten Radarsysteme sind.

Dieses Ziel wird in einem ersten Aspekt der Erfindung mit einer Vorrichtung der einleitend genannten Art erreicht, mit:
einem über und/oder seitlich der Fahrbahn angeordneten und auf die Fahrbahn gerichteten Detektor, der dafür ausgebildet ist, den Bewegungsvektor des Fahrzeugs an einem Ist-Ort zu einer Ist-Zeit zu messen,
einer an den Detektor angeschlossenen Trackingeinheit zum Berechnen eines Soll-Orts des Fahrzeugs zu einer Soll-Zeit auf Basis von Ist-Ort, Ist-Zeit und Bewegungsvektor,
einem ersten, mit dem Detektor verbundenen Radarsensor zum Aussenden eines auf den Ist-Ort gerichteten ersten Radarstrahls, Empfangen eines ersten reflektierten Radarstrahls und Ermitteln eines ersten Frequenzspektrums desselben,
einem zweiten, mit der Trackingeinheit verbundenen Radarsensor zum Aussenden eines zweiten, auf den Soll-Ort gerichteten Radarstrahls zur Soll-Zeit, Empfangen eines zweiten reflektierten Radarstrahls und Ermitteln eines zweiten Frequenzspektrums desselben, und
einer Auswerteeinheit zum Erzeugen des charakteristischen Merkmals des Fahrzeugs aus den ermittelten Frequenzspektra, wobei die Frequenzspektra als Fläche über einer Frequenz/Zeit-Ebene das charakteristische Merkmal bilden.

Die Erfindung beruht auf der Erkenntnis der Erfinder, dass die ermittelten Frequenzspektra charakteristische Fahrzeugmerkmale wiedergeben. Das Fahrzeug und seine spezifischen Oberflächenstruktur, wie z.B. Übergänge von Karosserie- zu Glasflächen, Rückspiegel, Antennen, Scheibenwischer, Auspuffteile oder angebaute Kühlaggregate etc., reflektieren jeweils spezifische Spektralanteile der ausgesendeten Radarstrahlen und erzeugen dadurch einen eigentümlichen Verlauf der Frequenzspektra als charakteristisches Merkmal des Fahrzeugs. Darin stellen Veränderungen vom ersten zum zweiten ermittelten Frequenzspektrum eine zusätzliche Komponente des charakteristischen Merkmals des Fahrzeugs dar. Einer Interpretation jedes Frequenzspektrums bedarf es nicht. Die genannte Fläche bildet gleichsam einen "Fingerabdruck" des Fahrzeugs und kann auf einfache Weise - ohne weitere Interpretation der Spektralanteile der Frequenzspektra - gespeichert, verglichen und sogar optisch ausgewertet werden. Dies reduziert den Auswerteaufwand im Vergleich zum bekannten Stand der Technik deutlich. Radarsensoren sind im Vergleich zu optischen Sensoren auch weniger anfällig für die im Straßenverkehr auftretenden Sichtbeeinträchtigungen, ebenso wie gegenüber Verschmutzung.

Günstig ist es, wenn der Radarstrahl des zweiten Radarsensors richtungssteuerbar ist. So kann der zweite Radarsensor einfach an unterschiedliche Erfordernisse, z.B. aufgrund seiner Anbringung oder in Bezug auf die Fahrzeuggeschwindigkeit - gegebenenfalls auch die gewählte Fahrspur - des Fahrzeugs angepasst werden; auch können aufeinanderfolgende Radarstrahlen in unterschiedliche Richtungen ausgesendet werden.

Die Richtungssteuerbarkeit des zweiten Radarsensors kann beispielsweise durch zumindest zwei sequenziell ansteuerbare Radarantennen mit verschiedener Aussenderichtung erzielt werden; alternativ oder ergänzend könnte auch eine mechanisch schwenkbare Radarantenne eingesetzt werden. Besonders bevorzugt hat der zweite Radarsensor eine Radarantenne mit steuerbarer Richtcharakteristik in Form eines phasengesteuerten AntennenArrays. Dadurch sind keine mechanischen beweglichen Teile und auch keine Umschaltung von einer auf eine andere Radarantenne notwendig; erfindungsgemäß wird dadurch die Fehleranfälligkeit weiter herabgesetzt und die Verfügbarkeit der Vorrichtung erhöht.

Vorteilhaft ist es, wenn die Trackingeinheit dafür ausgebildet ist, zumindest ein weiteres Soll-Orts/Zeit-Paar zu berechnen, der zweite Radarsensor dafür ausgebildet ist, hiefür zumindest ein weiteres Frequenzspektrum in der genannten Art und Weise zu ermitteln, und die Auswerteeinheit dafür ausgebildet ist, das charakteristische Merkmal aus allen ermittelten Frequenzspektra zu erzeugen. Solche weiteren Frequenzspektra, die zu einem vorbeifahrenden Fahrzeug ermittelt werden, lassen das charakteristische Merkmal des Fahrzeugs noch deutlicher werden, indem Änderungen der Frequenzspektra in mehreren Schritten einfließen.

In einer bevorzugten Ausführungsform der Erfindung sind der erste und der zweite Radarsensor durch einen gemeinsamen richtungssteuerbaren Radarsensor gebildet, wodurch ein Radarsensor eingespart wird. In einer besonders einfachen Ausführungsform der Erfindung kann ferner der Detektor durch den ersten Radarsensor gebildet sein, welcher bevorzugt anhand einer Doppler-Auswertung des reflektierten Radarstrahls den Bewegungsvektor hinsichtlich seiner Geschwindigkeit in Fahrtrichtung der Fahrbahn misst. Dadurch bedarf es keiner weiteren Sensoren zur Detektion von Ist-Ort und Ist-Zeit des Fahrzeugs; zur Detektion reicht in dieser Ausführungsform das Erkennen eines Fahrzeugs anhand einer Auswertung des reflektierten ersten Radarstrahls, z.B. im Frequenzspektrum. Wird kein Fahrzeug detektiert, so kann der erste Radarsensor, z.B. in regelmäßigen Zeitabständen, einen auf den Ist-Ort gerichteten ersten Radarstrahl aussenden, bis ein Fahrzeug detektiert wird.

Besonders günstig ist es, wenn der Bewegungsvektor in seiner Richtung durch die Fahrtrichtung der Fahrbahn bestimmt wird, da in diesem Fall bereits anhand einer die Geschwindigkeit des Fahrzeugs ermittelnden Doppler-Auswertung eines reflektierten Radarstrahls der Bewegungsvektor bestimmt ist.

In einer besonders vorteilhaften Ausführungsform der Erfindung umfasst die Vorrichtung ferner eine Datenbank zur Aufnahme charakteristischer Referenz-Merkmale von Referenz-Fahrzeugen bekannter Fahrzeugklasse, wobei die Auswerteeinheit ferner dafür ausgebildet ist, das erzeugte charakteristische Merkmal mit den Referenz-Merkmalen zu vergleichen und im Übereinstimmungsfall die Fahrzeugklasse des aufgefundenen Referenz-Fahrzeugs auszugeben. Ein Fahrzeug ist dadurch anhand der Frequenzspektra reflektierter Radarstrahlen klassifizierbar, welche gleichsam einen "Fingerabdruck" des Fahrzeugs darstellen. Ein Zuordnen einzelner Peaks in den Frequenzspektra z.B. zu Anbauteilen oder dem gesamten - optischen - Erscheindungsbild des Fahrzeugs, wie dies bei einer optischen Bilderkennung notwendig wäre, kann entfallen; Referenz-Merkmale können durch einfaches "Einlernen", d.h. Aufzeichnen der Frequenzspektra, gleicher oder ähnlicher Fahrzeuge bekannter Klasse erzeugt werden.

In einem zweiten Aspekt schafft die Erfindung eine Anlage, welche zumindest zwei der genannten Vorrichtungen umfasst, wobei die Vorrichtungen an einer die Fahrbahn überquerenden Brücke voneinander beabstandet angebracht sind, und wobei bevorzugt zumindest zwei der Vorrichtungen auf verschiedene Fahrspuren gerichtet sind. Auf diese Weise können mehrere Fahrstreifen durch eine Anlage ausgewertet werden. Bei mehreren auf eine Fahrspur gerichteten Vorrichtungen können die Frequenzspektra jener Vorrichtung mit der deutlichsten Ausprägung oder ein Durchschnitt der Frequenzspektra der Vorrichtungen herangezogen werden, wodurch die Anlage unanfälliger gegenüber Fehlern, z.B. durch ungenaue Spurwahl eines Fahrzeugs, wird.

In einem dritten Aspekt schafft die Erfindung ein Verfahren zum Bestimmen eines charakteristischen Merkmals eines auf einer Fahrbahn fahrenden Fahrzeugs, umfassend:
Aussenden eines auf einen Ist-Ort gerichteten ersten Radarstrahls zu einer Ist-Zeit, Empfangen eines ersten reflektierten Radarstrahls und Ermitteln eines ersten Frequenzspektrums desselben, mit gleichzeitigem, voraus- oder nachhergehendem
Messen des Bewegungsvektors des Fahrzeugs am Ist-Ort mittels eines über und/oder seitlich der Fahrbahn angeordneten Detektors und Berechnen eines Soll-Orts des Fahrzeugs zu einer Soll-Zeit auf Basis von Ist-Ort, Ist-Zeit und Bewegungsvektor;
Aussenden eines zweiten, auf den Soll-Ort gerichteten Radarstrahls zur Soll-Zeit, Empfangen eines zweiten reflektierten Radarstrahls und Ermitteln eines zweiten Frequenzspektrums desselben; und
Erzeugen des charakteristischen Merkmals des Fahrzeugs aus den ermittelten Frequenzspektra, wobei die Frequenzspektra als Fläche über einer Frequenz/Zeit-Ebene das charakteristische Merkmal bilden.

Bezüglich der Vorteile des erfindungsgemäßen Verfahrens wird auf die vorangegangenen Ausführungen zur Vorrichtung verwiesen.

Besonders vorteilhaft ist es, wenn zumindest ein weiteres Soll-Orts/Zeit-Paar berechnet und hiefür zumindest ein weiteres Frequenzspektrum in der genannten Art und Weise ermittelt wird, wobei das charakteristische Merkmal aus allen ermittelten Frequenzspektra erzeugt wird. Günstig ist dabei, wenn zur Berechnung jedes weiteren Soll-Orts/Zeit-Paar jeweils ein weiterer Bewegungsvektor gemessen wird. Dadurch ist ein verbessertes Tracking des Fahrzeugs auch bei Geschwindigkeits- und/oder Fahrtrichtungsänderung möglich. Soll das Tracking möglichst einfach gestaltet werden, so ist es vorteilhaft, wenn der Bewegungsvektor hinsichtlich seiner Geschwindigkeit in Fahrtrichtung der Fahrbahn anhand einer Doppler-Auswertung des reflektierten Radarstrahls gemessen wird.

Günstig ist es, wenn das Ist-Orts/Zeit-Paar durch Detektieren der Ist-Zeit eines Teils des Fahrzeugs an einem vorgegebenen Ist-Ort ermittelt wird, wobei der Fahrzeugteil durch Vergleichen des Frequenzspektrums des ersten reflektierten Radarstrahls mit einem bei leerer Fahrbahn ermittelten Referenz-Frequenzspektrum detektiert wird. Dies stellt ein sehr einfaches Entscheidungskriterium für eine Fahrzeugdetektion dar.

Gemäß einer vorteilhaften Ausführungsform der Erfindung wird das Verfahren ferner zum Klassifizieren eines Fahrzeugs eingesetzt, wobei das erzeugte charakteristische Merkmal mit Referenz-Merkmalen von Referenz-Fahrzeugen bekannter Fahrzeugklasse verglichen und im Übereinstimmungsfall die Fahrzeugklasse des aufgefundenen Referenz-Fahrzeugs ausgegeben wird.

Die Erfindung wird nachfolgend anhand eines in den beigeschlossenen Zeichnungen dargestellten Ausführungsbeispiels näher erläutert. In den Zeichnungen zeigen:
Fig. 1 eine Vorrichtung gemäß der Erfindung zum Bestimmen eines charakteristischen Merkmals eines Fahrzeugs schematisch in einer Seitenansicht quer zur Fahrtrichtung einer Fahrbahn;
Fig. 2 ein Blockschaltbild eines Beispiels für die Vorrichtung nach Fig. 1;
Fig. 3 ein Beispiel für ein Frequenz/Zeit-Diagramm von Frequenzspektra, die mit einer Vorrichtung nach den Fig. 1 bzw. 2 ermittelt wurden; und
die Fig. 4a und 4b eine Anlage mit mehreren Vorrichtungen nach den Fig. 1 bzw. 2 in einer Draufsicht (Fig. 4a) bzw. einer Sicht in Fahrbahnlängsrichtung (Fig. 4b).

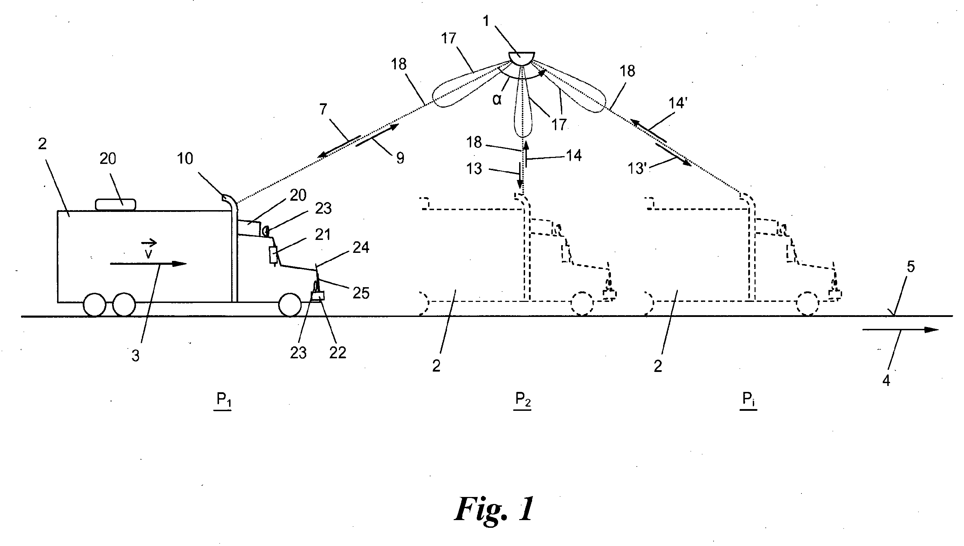

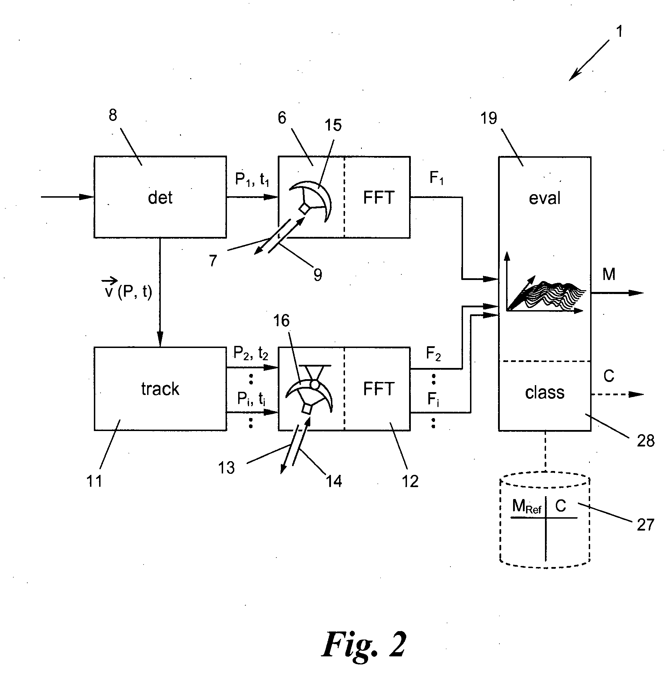

In den Fig. 1 und 2 ist eine Vorrichtung 1 zum Bestimmen eines charakteristischen Merkmals M eines Fahrzeugs 2 gezeigt, welches mit einer Geschwindigkeit v längs eines Bewegungsvektors 3 in Fahrtrichtung 4 einer Fahrbahn 5 fährt. Ein erster Radarsensor 6 der Vorrichtung 1 sendet einen ersten Radarstrahl 7 aus, der auf einen Ist-Ort P₁ gerichtet ist, an welchem das Fahrzeug 2 von einem Detektor 8 detektiert wird. Der erste Radarstrahl 7 wird von dem Fahrzeug 2 zumindest teilweise reflektiert. Der erste Radarsensor 6 empfängt daraufhin einen ersten, am Fahrzeug 2 reflektierten Radarstrahl 9 und ermittelt ein erstes Frequenzspektrum F₁ desselben in dem Fachmann bekannter Weise, z.B. mittels schneller Fourier-Transformation (fast Fourier-transformation, FFT).

Der Detektor 8 detektiert nicht nur ein Fahrzeug 2 an einem Ist-Ort P₁ zu einer Ist-Zeit t₁, sondern misst auch den Bewegungsvektor 3 des Fahrzeugs 2, u.zw. vor, gleichzeitig mit oder nach dem Aussenden des ersten Radarstrahls 7. Dazu kann der Detektor 8 beispielsweise an einem Ist-Ort P₁ in geeigneter Höhe quer über die Fahrbahn 5 verlaufende Lichtschranken (nicht dargestellt) aufweisen oder als Laser- bzw. separater Radarsensor ausgebildet sein. Der Detektor 8 kann fix auf den Ist-Ort P₁ gerichtet sein und dabei das Auftreten eines Fahrzeugs 2 an diesem detektieren, die Ist-Zeit t₁ des Auftretens dabei messen und das Ist-Orts/Zeit-Paar P₁, t₁ erfassen; alternativ kann der Detektor 8 beispielsweise auch als Fahrbahn-Laserscanner ausgebildet sein und dabei den Detektionsort eines Fahrzeugs 2 zusammen mit dem Detektionszeitpunkt als Ist-Orts/Zeit-Paar P₁, t₁ aufzeichnen.

Im Beispiel von Fig. 1 ist der Detektor 8 durch den ersten Radarsensor 6 selbst gebildet, der das Ist-Orts/Zeit-Paar P₁, t₁ durch Detektieren der Ist-Zeit t₁ eines Teils des Fahrzeugs 2 an einem vorgegebenen Ist-Ort P₁ ermittelt, auf welcher der erste Radarsensor 6 fix ausgerichtet ist. Der Fahrzeugteil - hier ein hochragender Auspuffteil 10 - wird in diesem Beispiel durch Vergleichen des Frequenzspektrums F₁ des ersten reflektierten Radarstrahls 7 mit einem bei leerer Fahrbahn 5 ermittelten Referenz-Frequenzspektrum detektiert.

Um eine Detektion charakteristischer Merkmale M eines Fahrzeugs 2 durchzuführen, ist eine geeignete Frequenzwahl des Radar-Systems hilfreich, wobei ein breitbandiges Radar sehr vorteilhaft ist, z.B. UWB-Radar (Ultra Wide Band). Charakteristische Merkmale in Form spezieller Fahrzeug-Objekte (z.B. Aufbauten, Karosserieteile, usw.) geben hier Anhalt zur geeigneten Wahl des Frequenzbereichs, deren mechanische Abmessungen mit der Wellenlänge (oder deren Vielfache) des Radarstrahls korrespondieren.

Die Vorrichtung 1 misst den Bewegungsvektor 3 gemäß Fig. 1 beispielsweise anhand einer Doppler-Auswertung des ersten reflektierten Radarstrahls 9, u.zw. hinsichtlich seiner Geschwindigkeit v unter der Annahme der Fahrtrichtung 4 der Fahrbahn 5 als Bewegungsrichtung des Fahrzeugs 2. Alternativ könnte die Vorrichtung 1 den Bewegungsvektor 3 in anderer bekannter Weise, z.B. aus der Messung zumindest zweier aufeinanderfolgender Fahrzeugpositionen und Zeitpunkte, ermitteln.

Eine an den Detektor 8 angeschlossene Trackingeinheit 11 berechnet auf Basis von Ist-Ort P₁, Ist-Zeit t₁ und Bewegungsvektor 3 des Fahrzeugs 2 einen Soll-Ort P₂, an welchem sich das Fahrzeug 2 zu einer ebenfalls berechneten Soll-Zeit t₂ befinden sollte. Für dieses Berechnen kann die Vorrichtung 1 Bereichsgrenzen haben, innerhalb welcher sich bei dieser Berechnung der Soll-Ort P₂ und/oder die zugehörige Soll-Zeit t₂ befinden sollen.

Hierauf sendet ein zweiter, mit der Trackingeinheit 11 verbundener Radarsensor 12 einen zweiten, auf den Soll-Ort P₂ gerichteten Radarstrahl 13 zur Soll-Zeit t₂, empfängt einen zweiten, vom Fahrzeug 2 reflektierten Radarstrahl 14 und ermittelt ein zweites Frequenzspektrum F₂ desselben. Wenn gewünscht, kann die Trackingeinheit 11 weitere Soll-Orts/Zeit-Paare Pᵢ, tᵢ (i = 3, 4, 5, ...) berechnen, wobei zur Berechnung jedes weiteren Soll-Orts/Zeit-Paars Pᵢ, tᵢ zur Erhöhung der Genauigkeit optional jeweils ein weiterer Bewegungsvektor 3 des Fahrzeugs 2 gemessen werden kann; der zweite Radarsensor 12 sendet dann auch, wie in Fig. 1 gezeigt, weitere zweite Radarstrahlen 13' aus bzw. empfängt weitere reflektierte zweite Radarstrahlen 14' und ermittelt weitere Frequenzspektren Fi (i = 3, 4, 5, ...) derselben.

Wie aus dem Stand der Technik bekannt, senden die Radarsensoren 6, 12 ihre Radarstrahlen 7, 13, 13' über Radarantennen 15, 16 mit jeweils keulenförmiger Richtcharakteristik 17 aus, wobei die zentralen Achsen der Haupt-Sendekeulen 17 als auf die Ist- bzw. Soll-Orte Pⱼ (j = 1, 2, 3, ...) gerichtete Hauptsenderichtungen 18 betrachtet werden, siehe Fig. 1. Der Öffnungs- bzw. Bündelungswinkel einer Sendekeule 17 hängt von der Richtwirkung der jeweiligen Antenne 15, 16 ab, welche auch durch den sog. "Antennengewinn" definiert wird. Je stärker die Richtwirkung der Radarantennen 15, 16 ist, desto mehr Radarenergie liegt in der Hauptsenderichtung 18 und desto ausgeprägter treten einzelne, von den ausgesendeten Radarstrahlen 7, 13, 13' getroffene Fahrzeugteile in den Frequenzspektra Fⱼ (j = 1, 2, 3, ...) hervor. Je geringer hingegen die Richtwirkung der Sendekeule 17, d.h. je geringer der Antennengewinn, umso größer ist die zu erwartende Vielfalt an in den Frequenzspektra Fⱼ auftretenden Amplitudenpeaks.

Vorteilhaft bei der Wahl der Antennenrichtwirkung ist eine größere Strahlöffnungsbreite quer zur Fahrbahn 5 und eine geringere Strahlöffnungsbreite längs der Fahrbahn 5.

Zur Ausrichtung des zweiten Radarstrahls 13 auf verschiedene Soll-Orte P₂ kann der zweite Radarstrahl 13 des zweiten Radarsensors 12 richtungssteuerbar sein, insbesondere wenn weitere Soll-Orts/Zeit-Paare Pᵢ, tᵢ berechnet werden und dazu weitere Frequenzspektra Fᵢ ermittelt werden sollen. Dazu kann der zweite Radarsensor 12 über mehrere, sequenziell angesteuerte und verschieden ausgerichtete Radarantennen 16 verfügen oder eine zweite Radarantenne 16 mechanisch verstellbar sein.

Im vorliegenden Ausführungsbeispiel hat die zweite Radarantenne 16 eine steuerbare Richtcharakteristik, welche durch ein phasengesteuertes Anntennen-Array gebildet wird. Es versteht sich, dass auch der erste Radarstrahl 7 des ersten Radarsensors 6 richtungssteuerbar sein kann. Ferner können, wenn gewünscht, der erste und der zweite Radarsensor 6, 12 durch einen gemeinsamen richtungssteuerbaren Radarsensor 12 gebildet sein (nicht dargestellt).

Zurückkommend auf Fig. 2 erzeugt eine Auswerteeinheit 19 das charakteristische Merkmal M des Fahrzeugs 2 aus dem ersten und dem zweiten Frequenzspektrum F₁, F₂ und den allfälligen weiteren Frequenzspektra Fᵢ, d.h. aus allen Frequenzspektra Fⱼ.

Als charakteristisches Merkmal M des Fahrzeugs 2 können dabei Frequenzspektra Fⱼ des ganzen Fahrzeugs 2 oder Teile seiner Oberfächenstruktur, z.B. eines oder mehrerer charakteristischer Anbauteile des Fahrzeugs 2, wie der genannte Auspuffteil 10, ein Kühlaggregat 20, Rückspiegel 21, Stoßstange 22, Schweinwerfer 23, Windabweiser 24 oder sein Kühlergrill 25, herangezogen werden. Ganz allgemein stellen die ermittelten Frequenzspektra Fⱼ direkt oder in weiterverarbeiteter Form das charakteristische Merkmal M des Fahrzeugs 2 dar. Prinzipiell kann neben der Frequenz auch die Polarisation der Radarstrahlen 7, 9, 13, 14, 14' zur Bestimmung des charakteristischen Merkmals M herangezogen werden.

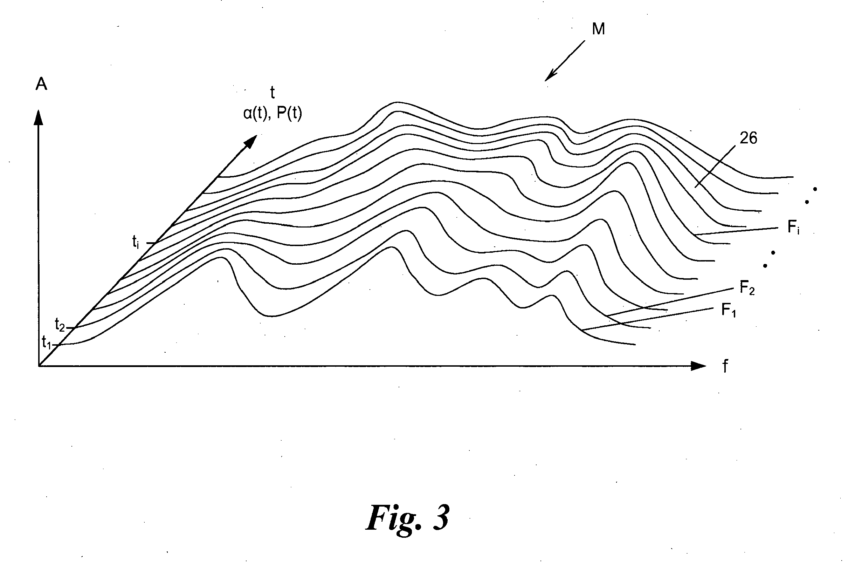

Im Beispiel von Fig. 3 werden die ermittelten Frequenzspektra Fⱼ als Fläche 26 über der Frequenz/Zeit-Ebene f/t aufgetragen. Die Fläche 26 bildet so insgesamt das charakteristische Merkmal M des Fahrzeugs 2 und damit gleichsam einen charakteristischen "Fingerabdruck" des Fahrzeugs 2. In der Darstellung von Fig. 3 ist erkennbar, dass infolge des Trackings des Fahrzeugs 2 und des Bildens und Auftragens mehrerer Frequenzspektra Fⱼ das charakteristische Merkmal M des Fahrzeugs 2 durch die zeitliche Änderung der Frequenzspektra Fⱼ mitbestimmt wird. Anhand des zeitlichen Verlaufs können verschiedene Fahrzeuge 2, die in einzelnen Perspektiven ähnliche Frequenzspektra Fⱼ aufweisen, dennoch unterschieden werden und Fehler beim Bestimmen des charakteristischen Merkmals M eines Fahrzeugs 2 vermieden werden. Der zeitliche Verlauf der Frequenzspektra Fⱼ stellt eine räumliche Radarsignatur aus verschiedenen Aspektwinkeln eines charakteristischen Merkmals M dar.

Die in Fig. 3 dargestellte Fläche 26 wird durch die Amplituden A der Frequenzspektra Fⱼ bestimmt und aufgespannt; alternativ oder ergänzend können jedoch auch die Phasen der Frequenzspektra Fⱼ berücksichtigt und aufgetragen werden. Ebenso könnten, wie in Fig. 3 angedeutet, die Frequenzspektra Fⱼ und die Fläche 26 in Abhängigkeit von einem gegenüber der Hauptsenderichtung 18 des ersten Radarstrahls 7 gemessenen Abstrahlwinkel α oder den Ist- und Soll-Orten Pⱼ anstatt der Zeit t, gebildet werden, z.B. wenn stark veränderliche Geschwindigkeiten v eines Fahrzeugs 2 zu einer ungleichmäßigen Auflösung oder einer Verzerrung der Fläche 26 führen würden.

Wenn gewünscht, können Frequenzspektra Fⱼ z.B. in Form von Flächen 26, in einer optionalen Datenbank 27 der Vorrichtung 1 als charakteristische Referenz-Merkmale M_{Ref} von Referenz-Fahrzeugen gespeichert werden. Werden diese Referenz-Fahrzeuge bestimmten Fahrzeugklassen C zugeordnet, so kann die Auswerteeinheit 19 das erzeugte charakteristische Merkmal M eines Fahrzeugs 2 mit den Referenz-Merkmalen M_{Ref} aus der Datenbank 27 in einer Klassifizierungsstufe 28 vergleichen und im Übereinstimmungsfall die Fahrzeugklasse C des aufgefundenen Referenz-Fahrzeugs für das Fahrzeug 2 ausgeben, d.h. das Fahrzeug 2 klassifizieren.

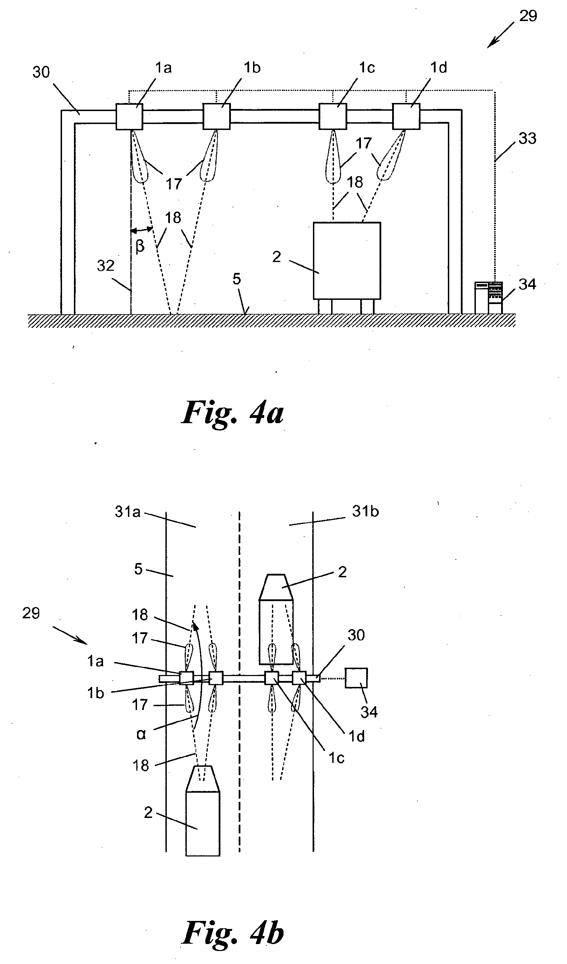

Gemäß den Beispielen in den Fig. 4a und 4b können mehrere der Vorrichtungen 1 - hier 1a, 1b, 1c, 1d - zu einer Anlage 29 kombiniert werden. In diesem Beispiel sind die Vorrichtungen 1a, 1b, 1c, 1d an einer die Fahrbahn 5 überquerende Brücke 30 voneinander beabstandet angebracht, wobei zwei Vorrichtungen 1a, 1b auf einen Fahrstreifen 31a und die beiden anderen Vorrichtungen 1c und 1d auf den benachbarten Fahrstreifen 31b gerichtet sind.

Wie in Fig. 4a gezeigt, können die Hauptsenderichtungen 18 in einer Ebene quer zur Fahrtrichtung 4 gegenüber einer Normalen 32 auf die Fahrbahn 5 verschiedene und wenn gewünscht sogar variable Winkel β aufweisen. Ferner können die Vorrichtungen 1a, 1b, 1c, 1d über eine Datenverbindung 33 miteinander und mit einer Recheneinheit 34 verbunden sein. Die Recheneinheit 34 könnte die charakteristischen Merkmale M der Fahrzeuge 2 bzw. optionale Klassifikationsergebnisse C aufzeichnen und/oder an eine Zentrale, z.B. eines Straßenmautsystems, weiterleiten (nicht dargestellt). Ferner können, wenn gewünscht, einzelne Aufgaben des Detektors 8, der Trackingeinheit 11 sowie der Radarsensoren 6, 12 und der Auswerteinheit 19 an die Recheneinheit 34 ausgelagert werden, welche in diesem Fall diese Aufgaben, z.B. das Tracking oder eine Spektralanalyse, zentral auch für alle Vorrichtungen 1a, 1b, 1c, 1d ausführen kann.

Es versteht sich, dass die Fahrbahn 5 aus den Fig. 4a und 4b auch mehr als zweispurig sein kann und/oder die Fahrspuren 31a, 31b voneinander verschiedene Fahrtrichtungen 4 haben können. Auch können eine oder mehr als zwei Vorrichtungen 1 für jede Fahrspur 31a, 31b eingesetzt werden und diese, wenn gewünscht, auch seitlich der Fahrbahn 5 oder vor bzw. nach einer Kurve, sogar in der Flucht der Fahrbahn 5, angeordnet sein, solange Radarstrahlen 7, 13, 13' auf ein vorbeifahrendes Fahrzeug 2 ausgesendet werden können.

Die Erfindung ist nicht auf die dargestellten Ausführungsformen beschränkt, sondern umfasst alle Varianten, Modifikationen und Kombinationen der vorgestellten Maßnahmen, die in den Rahmen der angeschlossenen Ansprüche fallen.

## Patentansprüche

1. Vorrichtung zum Bestimmen eines charakteristischen Merkmals (M) eines auf einer Fahrbahn (5) fahrenden Fahrzeugs (2), mit:
einem über und/oder seitlich der Fahrbahn (5) angeordneten und auf die Fahrbahn (5) gerichteten Detektor (8), der dafür ausgebildet ist, den Bewegungsvektor (3) des Fahrzeugs (2) an einem Ist-Ort (P₁) zu einer Ist-Zeit (t₁) zu messen,
einer an den Detektor (8) angeschlossenen Trackingeinheit (11) zum Berechnen eines Soll-Orts (P₂) des Fahrzeugs (2) zu einer Soll-Zeit (t₂) auf Basis von Ist-Ort (P₁), Ist-Zeit (t₁) und Bewegungsvektor (3),
einem ersten, mit dem Detektor (8) verbundenen Radarsensor (6) zum Aussenden eines auf den Ist-Ort (P₁) gerichteten ersten Radarstrahls (7), Empfangen eines ersten reflektierten Radarstrahls (9) und Ermitteln eines ersten Frequenzspektrums (F₁) desselben,
einem zweiten, mit der Trackingeinheit (11) verbundenen Radarsensor (12) zum Aussenden eines zweiten, auf den Soll-Ort (P₂) gerichteten Radarstrahls (13) zur Soll-Zeit (t₂), Empfangen eines zweiten reflektierten Radarstrahls (14) und Ermitteln eines zweiten Frequenzspektrums (F₂) desselben, und
einer Auswerteeinheit (19) zum Erzeugen des charakteristischen Merkmals (M) des Fahrzeugs (2) aus den ermittelten Frequenzspektra (F₁, F₂), **dadurch gekennzeichnet, daß** die Frequenzspektra (Fⱼ) als Fläche (26) über einer Frequenz/Zeit-Ebene das charakteristische Merkmal (M) bilden.

2. Vorrichtung nach Anspruch 1, **dadurch gekennzeichnet, dass** der Radarstrahl (13) des zweiten Radarsensors (12) richtungssteuerbar ist.

3. Vorrichtung nach Anspruch 2, **dadurch gekennzeichnet, dass** der zweite Radarsensor (12) eine Radarantenne (16) mit steuerbarer Richtcharakteristik in Form eines phasengesteuertes Antennenarrays hat.

4. Vorrichtung nach Anspruch 2 oder 3, **dadurch gekennzeichnet, dass** die Trackingeinheit (11) dafür ausgebildet ist, zumindest ein weiteres Soll-Orts/Zeit-Paar (Pᵢ, tᵢ) zu berechnen, dass der zweite Radarsensor (12) dafür ausgebildet ist, hiefür zumindest ein weiteres Frequenzspektrum (Fᵢ) in der genannten Art und Weise zu ermitteln, und dass die Auswerteeinheit (19) dafür ausgebildet ist, das charakteristische Merkmal (M) aus allen ermittelten Frequenzspektra (Fⱼ) zu erzeugen.

5. Vorrichtung nach einem der Ansprüche 2 bis 4, **dadurch gekennzeichnet, dass** der erste und der zweite Radarsensor (6, 12) durch einen gemeinsamen richtungssteuerbaren Radarsensor (12) gebildet sind.

6. Vorrichtung nach einem der Ansprüche 1 bis 5, **dadurch gekennzeichnet, dass** der Detektor (8) durch den ersten Radarsensor (6) gebildet ist, welcher bevorzugt anhand einer Doppler-Auswertung des reflektierten Radarstrahls (9) den Bewegungsvektor (3) hinsichtlich seiner Geschwindigkeit (v) in Fahrtrichtung (4) der Fahrbahn (5) misst.

7. Vorrichtung nach einem der Ansprüche 1 bis 6, ferner mit:
einer Datenbank (27) zur Aufnahme charakteristischer Referenz-Merkmale (M_{Ref}) von Referenz-Fahrzeugen bekannter Fahrzeugklasse (C), wobei die Auswerteeinheit (19) ferner dafür ausgebildet ist, das erzeugte charakteristische Merkmal (M) mit den Referenz-Merkmalen (M_{Ref}) zu vergleichen und im Übereinstimmungsfall die Fahrzeugklasse (C) des aufgefundenen Referenz-Fahrzeugs auszugeben.

8. Anlage, umfassend zumindest zwei Vorrichtungen nach einem der Ansprüche 1 bis 7, **dadurch gekennzeichnet, dass** die Vorrichtungen (1a, 1b, 1c, 1d) an einer die Fahrbahn (5) überquerenden Brücke (30) voneinander beabstandet angebracht sind, wobei bevorzugt zumindest zwei der Vorrichtungen (1a, 1b, 1c, 1d) auf verschiedene Fahrspuren (31a, 31b) gerichtet sind.

9. Verfahren zum Bestimmen eines charakteristischen Merkmals (M) eines auf einer Fahrbahn (5) fahrenden Fahrzeugs (2), umfassend:
Aussenden eines auf einen Ist-Ort (P₁) gerichteten ersten Radarstrahls (7) zu einer Ist-Zeit (t₁), Empfangen eines ersten reflektierten Radarstrahls (9) und Ermitteln eines ersten Frequenzspektrums (F₁) desselben, mit gleichzeitigem, voraus- oder nachhergehendem
Messen des Bewegungsvektors (3) des Fahrzeugs (2) am Ist-Ort (P₁) mittels eines über und/oder seitlich der Fahrbahn (5) angeordneten Detektors (8) und Berechnen eines Soll-Orts (P₂) des Fahrzeugs (2) zu einer Soll-Zeit (t₂) auf Basis von Ist-Ort (P₁), Ist-Zeit (t₁) und Bewegungsvektor (3);
Aussenden eines zweiten, auf den Soll-Ort (P₂) gerichteten Radarstrahls (13) zur Soll-Zeit (t₂), Empfangen eines zweiten reflektierten Radarstrahls (14) und Ermitteln eines zweiten Frequenzspektrums (F₂) desselben; und
Erzeugen des charakteristischen Merkmals (M) des Fahrzeugs (2) aus den ermittelten Frequenzspektra (F₁, F₂), **dadurch gekennzeichnet, daß** die Frequenzspektra (Fⱼ) als Fläche (26) über einer Frequenz/Zeit-Ebene das charakteristische Merkmal (M) bilden.

10. Verfahren nach Anspruch 9, **dadurch gekennzeichnet, dass** zumindest ein weiteres Soll-Orts/Zeit-Paar (Pᵢ, tᵢ) berechnet und hiefür zumindest ein weiteres Frequenzspektrum (Fᵢ) in der genannten Art und Weise ermittelt wird, wobei das charakteristische Merkmal (M) aus allen ermittelten Frequenzspektra (Fⱼ) erzeugt wird.

11. Verfahren nach Anspruch 10, **dadurch gekennzeichnet, dass** zur Berechnung jedes weiteren Soll-Orts/Zeit-Paar (Pᵢ, tᵢ) jeweils ein weiterer Bewegungsvektor (3) gemessen wird.

12. Verfahren nach einem der Ansprüche 9 bis 11, **dadurch gekennzeichnet, dass** der Bewegungsvektor (3) hinsichtlich seiner Geschwindigkeit (v) in Fahrtrichtung (4) der Fahrbahn (5) anhand einer Doppler-Auswertung des reflektierten Radarstrahls (14, 14') gemessen wird.

13. Verfahren nach einem der Ansprüche 9 bis 12, **dadurch gekennzeichnet, dass** das Ist-Orts/Zeit-Paar (P₁, t₁) durch Detektieren der Ist-Zeit (t₁) eines Teils (10, 20, 21, 22, 23, 24, 25) des Fahrzeugs (2) an einem vorgegebenen Ist-Ort (P₁) ermittelt wird, wobei der Fahrzeugteil (10, 20, 21, 22, 23, 24, 25) durch Vergleichen des Frequenzspektrums (F₁) des ersten reflektierten Radarstrahls (9) mit einem bei leerer Fahrbahn (5) ermittelten Referenz-Frequenzspektrum detektiert wird.

14. Verfahren nach einem der Ansprüche 9 bis 13, ferner zum Klassifizieren eines Fahrzeugs (2), **dadurch gekennzeichnet, dass** das erzeugte charakteristische Merkmal (M) mit Referenz-Merkmalen (M_{Ref}) von Referenz-Fahrzeugen bekannter Fahrzeugklasse (C) verglichen und im Übereinstimmungsfall die Fahrzeugklasse (C) des aufgefundenen Referenz-Fahrzeugs ausgegeben wird.

## Claims

1. An apparatus for determining a characteristic feature (M) of a vehicle (2) travelling on a roadway (5), comprising:
a detector (8), which is positioned above and/or sideways of the roadway (5), directed towards the roadway (5), and configured to measure the movement vector (3) of the vehicle (2) at a current location (P₁) at a current time (t₁),
a tracking unit (11), connected to the detector (8), for calculating a target location (P₂) of the vehicle (2) at a target time (t₂) on the basis of current location (P₁), current time (t₁) and movement vector (3),
a first radar sensor (6), connected to the detector (8), for transmitting a first radar beam (7) directed towards the current location (P₁), receiving a first reflected radar beam (9) and determining a first frequency spectrum (F₁) thereof,
a second radar sensor (12), connected to the tracking unit (11), for transmitting a second radar beam (13), directed towards the target location (P₂), at the target time (t₂), receiving a second reflected radar beam (14) and determining a second frequency spectrum (F₂) thereof, and
an evaluation unit (19) for generating the characteristic feature (M) of the vehicle (2) from the determined frequency spectra (F₁, F₂), **characterized in that** the determined frequency spectra (Fⱼ) form the characteristic feature (M) as a surface (26) over a frequency/time plane.

2. The apparatus according to Claim 1, **characterised in that** the direction of the radar beam (13) of the second radar sensor (12) can be controlled.

3. The apparatus according to Claim 2, **characterised in that** the second radar sensor (12) has a radar antenna (16) with controllable direction characteristic in the form of a phase-controlled antenna array.

4. The apparatus according to Claim 2 or 3, **characterised in that** the tracking unit (11) is configured to calculate at least one further target location/time pair (Pᵢ, tᵢ), **in that** the second radar sensor (12) is, for this purpose, configured to determine at least one further frequency spectrum (Fᵢ) in the aforementioned manner, and **in that** the evaluation unit (19) is configured to generate the characteristic feature (M) from all determined frequency spectra (Fⱼ).

5. The apparatus according to one of Claims 2 to 4, **characterised in that** the first and second radar sensors (6, 12) are formed by a common radar sensor (12), of which the direction can be controlled.

6. The apparatus according to one of Claims 1 to 5, **characterised in that** the detector (8) is formed by the first radar sensor (6), which measures the speed (v) of the movement vector (3) in the direction of travel (4) of the roadway (5), preferably on the basis of a Doppler evaluation of the reflected radar beam (9).

7. The apparatus according to one of Claims 1 to 6, further comprising:
a database (27) for recording characteristic reference features (M_{Ref}) of reference vehicles of known vehicle class (C), wherein the evaluation unit (19) is further configured to compare the generated characteristic feature (M) with the reference features (M_{Ref}), and, in the case of a match, to output the vehicle class (C) of the matching reference vehicle.

8. A system comprising at least two apparatuses according to one of Claims 1 to 7, **characterised in that** the apparatuses (1a, 1b, 1c, 1d) are mounted at a distance from one another on a gantry (30) spanning the roadway (5), wherein preferably at least two of the apparatuses (1a, 1b, 1c, 1d) are directed towards different lanes (31a, 31b) of the roadway.

9. A method for determining a characteristic feature (M) of a vehicle (2) travelling on a roadway (5), said method comprising:
transmitting a first radar beam (7), directed towards a current location (P₁), at a current time (t₁), receiving a first reflected radar beam (9) and determining a first frequency spectrum (F₁) thereof, with simultaneous, prior or subsequent
measuring the movement vector (3) of the vehicle (2) at the current location (P₁) by means of a detector (8) positioned above or sideways of the roadway (5) and calculation of a target location (P₂) of the vehicle (2) at a target time (t₂) on the basis of the current location (P₁), current time (t₁) and movement vector (3);
transmitting a second radar beam (13), directed towards the target location (P₂), at the target time (t₂), receiving a second reflected radar beam (14) and determining a second frequency spectrum (F₂) thereof; and
generating the characteristic feature (M) of the vehicle (2) from the determined frequency spectra (F₁, F₂), **characterized in that** the determined frequency spectra (Fⱼ) form the characteristic feature (M) as a surface (26) over a frequency/time plane.

10. The method according to Claim 9, **characterised in that** at least one further target location/time pair (Pᵢ, tᵢ) is calculated, and for this purpose at least one further frequency spectrum (Fᵢ) is determined in the aforementioned manner, wherein the characteristic feature (M) is generated from all determined frequency spectra (Fⱼ).

11. The method according to Claim 10, **characterised in that**, for the calculation of each further target location/time pair (Pi, tᵢ), a further movement vector (3) is measured in each case.

12. The method according to one of Claims 9 to 11, **characterised in that** the speed (v) of the movement vector (3) in the direction of travel (4) of the roadway (5) is measured on the basis of a Doppler evaluation of the reflected radar beam (14, 14').

13. The method according to one of Claims 9 to 12, **characterised in that** the current location/time pair (P₁, t₁) is determined by detecting the current time (t₁) of a part (10, 20, 21, 22, 23, 24, 25) of the vehicle (2) at a predefined current location (P₁), wherein the vehicle part (10, 20, 21, 22, 23, 24, 25) is detected by comparing the frequency spectrum (F₁) of the first reflected radar beam (9) with a reference frequency spectrum determined with an empty roadway (5).

14. The method according to one of Claims 9 to 13, further for classifying a vehicle (2), **characterised in that** the generated characteristic feature (M) is compared with reference features (M_{Ref}) of reference vehicles of known vehicle class (C), and, in the case of a match, the vehicle class (C) of the matching reference vehicle is output.

## Revendications

1. Dispositif pour la détermination d'un signe caractéristique (M) d'un véhicule (2) circulant sur une voie de circulation (5), avec :
un détecteur (8) agencé au-dessus et/ou sur le côté de la voie de circulation (5) et orienté vers la voie de circulation (5), lequel est conçu pour mesurer le vecteur de mouvement (3) du véhicule (2) au niveau d'un lieu réel (P₁) à un temps réel (t₁),
une unité de suivi (11) raccordée au détecteur (8) pour le calcul d'un lieu prescrit (P₂) du véhicule (2) à un temps prescrit (t₂), sur la base du lieu réel (P₁), du temps réel (t₁) et du vecteur de mouvement (3),
un premier capteur radar (6) relié au détecteur (8), pour l'émission d'un premier faisceau radar (7) orienté vers le lieu réel (P₁), la réception d'un premier faisceau radar réfléchi (9) et la détermination d'un premier spectre de fréquences (F₁) de celui-ci,
un deuxième capteur radar (12) relié à l'unité de suivi (11), pour l'émission d'un deuxième faisceau radar (13) orienté vers le lieu prescrit (P₂) au temps prescrit (t₂), la réception d'un deuxième faisceau radar réfléchi (14) et la détermination d'un deuxième spectre de fréquences (F₂) de celui-ci, et
une unité d'évaluation (19) destinée à générer le signe caractéristique (M) du véhicule (2) à partir des spectres de fréquences (F₁, F₂) déterminés, **caractérisé en ce que** les spectres de fréquences (Fⱼ) forment le signe caractéristique (M) en tant que surface (26) sur un plan fréquence/temps.

2. Dispositif selon la revendication 1, **caractérisé en ce que** la direction du faisceau radar (13) du deuxième capteur radar (12) peut être commandée.

3. Dispositif selon la revendication 2, **caractérisé en ce que** le deuxième capteur radar (12) comporte une antenne radar (16) avec une caractéristique de directivité commandable sous la forme d'un réseau d'antennes commandées en phase.

4. Dispositif selon la revendication 2 ou 3, **caractérisé en ce que** l'unité de suivi (11) est conçue pour calculer au moins une autre paire lieu/temps prescrit (Pᵢ, tᵢ), **en ce que** le deuxième capteur radar (12) est conçu pour déterminer à cette fin au moins un autre spectre de fréquences (Fᵢ) de la manière citée, et **en ce que** l'unité d'évaluation (19) est conçue pour générer le signe caractéristique (M) à partir de tous les spectres de fréquences (Fⱼ) déterminés.

5. Dispositif selon l'une des revendications 2 à 4, **caractérisé en ce que** les premier et deuxième capteurs radar (6, 12) sont formés par un capteur radar commun (12) dont l'orientation peut être commandée.

6. Dispositif selon l'une des revendications 1 à 5, **caractérisé en ce que** le détecteur (8) est formé par le premier capteur radar (6), lequel mesure de préférence le vecteur de mouvement (3) quant à sa vitesse (v) dans la direction de déplacement (4) de la voie de circulation (5), à l'aide d'une évaluation Doppler du faisceau radar réfléchi (9).

7. Dispositif selon l'une des revendications 1 à 6, comprenant en outre :
une banque de données (27) destinée à recevoir des signes caractéristiques de référence (M_{ref}) de véhicules de référence d'une classe de véhicule (C) connue, l'unité d'évaluation (19) étant en outre conçue pour comparer le signe caractéristique (M) généré avec les signes de référence (M_{ref}) et pour dépenser la classe de véhicule (C) du véhicule de référence trouvé, en cas de concordance.

8. Installation comprenant au moins deux dispositifs selon l'une des revendications 1 à 7, **caractérisée en ce que** les dispositifs (1a, 1b, 1c, 1d) sont fixés sur un pont (30) passant par-dessus la voie de circulation (5), en étant espacés les uns des autres, dans laquelle au moins deux des dispositifs (1a, 1b, 1c, 1d) sont de préférence orientés vers des voie de circulation (31a, 31b) différentes.

9. Procédé pour la détermination d'un signe caractéristique (M) d'un véhicule (2) circulant sur une voie de circulation (5), comprenant :
l'émission d'un premier faisceau radar (7) orienté vers un lieu réel (P₁) à un temps réel (t₁), la réception d'un premier faisceau radar réfléchi (9) et la détermination d'un premier spectre de fréquences (F₁) de celui-ci,
la mesure simultanée, préalable ou consécutive du vecteur de mouvement (3) du véhicule (2) au niveau du lieu réel (P₁) au moyen d'un détecteur (8) agencé au-dessus et/ou sur le côté de la voie de circulation (5), et le calcul d'un lieu prescrit (P₂) du véhicule (2) à un temps prescrit (t₂), sur la base du lieu réel (P₁), du temps réel (t₁) et du vecteur de mouvement (3) ;
l'émission d'un deuxième faisceau radar (13) orienté vers le lieu prescrit (P₂) au temps prescrit (t₂), la réception d'un deuxième faisceau radar réfléchi (14) et la détermination d'un deuxième spectre de fréquences (F₂) de celui-ci ; et
la génération du signe caractéristique (M) du véhicule (2) à partir des spectres de fréquences (F₁, F₂) déterminés, **caractérisé en ce que** les spectres de fréquences (Fⱼ) forment le signe caractéristique (M) en tant que surface (26) sur un plan fréquence/temps.

10. Procédé selon la revendication 9, **caractérisé en ce qu'**au moins une autre paire lieu/temps prescrit (Pᵢ, ti) est calculée et au moins un autre spectre de fréquences (Fᵢ) est déterminée à cette fin, de la manière citée, le signe caractéristique (M) étant généré à partir de tous les spectres de fréquences (Fⱼ) déterminés.

11. Procédé selon la revendication 10, **caractérisé en ce que** pour le calcul de chaque autre paire lieu/temps prescrit (Pᵢ, tᵢ), un autre vecteur de mouvement (3) est mesuré respectivement.

12. Procédé selon l'une des revendications 9 à 11, **caractérisé en ce que** le vecteur de mouvement (3) est mesuré quant à sa vitesse (v) dans la direction de déplacement (4) de la voie de circulation (5), à l'aide d'une évaluation Doppler du faisceau radar réfléchi (14, 14').

13. Procédé selon l'une des revendications 9 à 12, **caractérisé en ce que** la paire lieu/temps effectif (P₁, t₁) est déterminée par détection du temps réel (t₁) d'une partie (10, 20, 21, 22, 23, 24, 25) du véhicule (2) en un lieu réel (P₁) prédéfini, dans lequel la partie de véhicule (10, 20, 21, 22, 23, 24, 25) est détectée en comparant le spectre de fréquences (F₁) du premier faisceau radar réfléchi (9) avec un spectre de fréquences déterminé lorsque la voie de circulation (5) est vide.

14. Procédé selon l'une des revendications 9 à 13, en outre pour la classification d'un véhicule (2), **caractérisé en ce que** le signe caractéristique (M) généré est comparé avec des signes caractéristiques (M_{ref}) de véhicules de référence d'une classe de véhicule (C) connue, et la classe de véhicule (C) du véhicules de référence trouvé est restituée en cas de concordance.
